Europäisches Patentamt

European Patent Office

Office européen des brevets

(11) Numéro de publication: **0 208 155 B1**

## (12) FASCICULE DE BREVET EUROPEEN

(45) Date de publication de fascicule du brevet:
**13.03.91**

(21) Numéro de dépôt: **86107874.9**

(22) Date de dépôt: **10.06.86**

(51) Int. Cl.⁵: **G02B 6/38**

(54) Bloc de jonction pour fibres optiques.

(30) Priorité: **12.06.85 FR 8508902**

(43) Date de publication de la demande:
**14.01.87 Bulletin 87/03**

(45) Mention de la délivrance du brevet:
**13.03.91 Bulletin 91/11**

(84) Etats contractants désignés:
**AT BE CH DE FR GB IT LI LU NL SE**

(56) Documents cités:
EP-A- 103 527          EP-A- 0 057 828
EP-A- 0 116 481          DE-A- 2 524 644
GB-A- 1 126 676          US-A- 4 146 301

ELEKTROTECHNISCH ZEITSCHRIFT, vol. 103, no. 19, octobre 1982, pages 1094-1096, Berlin, DE; B. HALLER: "Schraubenlose Verbindungstechnik"

PATENTS ABSTRACTS OF JAPAN, vol. 6, no. 100 (P-121)[978], 9 juin 1982; & JP - A - 57 34 512

(73) Titulaire: **ENTRELEC SA**
**184-186 rue Léon Blum**
**F-69100 Villeurbanne(FR)**

(72) Inventeur: **Heng, Jean-Paul**
**18, rue des Tourelles**
**F-69005 Lyon(FR)**
Inventeur: **Jusseau, Marcel**
**84, rue Racine**
**F-69100 Villeurbanne(FR)**
Inventeur: **Humbert-Labeaumaz, Alain**
**"La Petite Roseraie" 7 chemin Guillermin**
**F-69500 Bron(FR)**

(74) Mandataire: **Weinmiller, Jürgen et al**
**Lennéstrasse 9 Postfach 24**
**W-8133 Feldafing(DE)**

## Description

La présente invention concerne un bloc de jonction selon le préambule de la revendication 1. Un tel bloc est destiné à assurer le raccordement de fibres optiques bout à bout et il est décrit, par exemple, dans le document de brevet E.P.A-103 527.

Depuis peu, les fibres optiques deviennent des éléments constitutifs ordinaires des installations qui auparavant ne comportaient pratiquement que des liaisons par fils électriques. Les installateurs sont donc souvent amenés à monter côte à côte des organes de raccordement pour fibres optiques et des organes de raccordement pour fils électriques, ce qui les conduit à demander aux fabricants de matériel de raccordement la réalisation d'équipements et notamment de blocs de jonction optiques susceptibles d'être aisément associés aux blocs électriques sur les mêmes supports.

Or les blocs de jonction électriques comportent depuis longtemps un certain nombre de caractéristiques communes facilitant leur montage sur divers supports normalisés et un raccordement aisé des fils. A titre d'exemple le document de brevet français FR-A-2502445 présente un bloc de jonction composé de deux cuvettes se refermant l'une contre l'autre pour former un bloc clos qui se monte sur un rail et qui comporte intérieurement au moins une carte de circuits imprimés et des bornes de connexion accessibles de l'extérieur. D'autres blocs analogues ne comportent que des bornes de connexion interconnectées deux à deux et sont réalisés chacun à l'aide de deux cuvettes maintenues ensemble par encliquetage de tétons de l'une dans des évidements correspondants de l'autre.

La présente invention a donc pour objet un bloc de jonction pour fibres optiques analogue aux blocs de jonction électrique évoqués ci-dessus et permettant un raccordement facile et précis des fibres optiques entre elles. Cet objet selon est atteint l'invention par le bloc de jonction tel que défini dans la partie caractérisante de la revendication 1.

L'invention, ses caractéristiques et ses avantages sont précisés dans la description qui suit, en liaison avec les figures répertoriées ci-dessous.

La figure 1 présente une vue de face d'une pièce constitutive de bloc de jonction, selon l'invention, à laquelle on a associé une esquisse partielle en traits discontinus de la base de la pièce identique accolée à elle pour former un bloc.

La figure 2 montre une vue de côté d'un bloc de jonction composé de la pièce présentée figure 1 en traits pleins et de la pièce identique accolée esquissée en traits discontinus.

La figure 3 montre une vue de dessus du bloc présenté figure t et 2, sans bouchon.

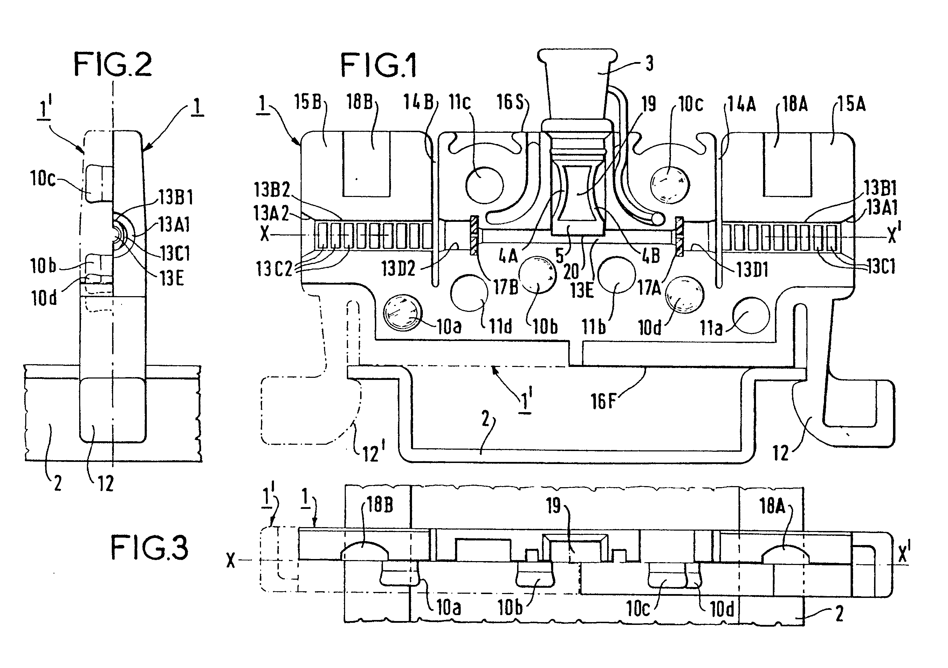

Le bloc de jonction présenté sur les figures 1 à 3 se compose de deux pièces identiques référencées ici 1 et 1' et présentées l'une entièrement et en traits continus et l'autre partiellement et en traits discontinus ; un bloc clos est obtenu en appliquant une face identique de chacune des deux pièces identiques l'une contre l'autre. Lesdites faces identiques appliquées l'une contre l'autre de deux pièces, identiques et ici hermaphrodites, sont munies de tétons 10 et d'évidements 11 complémentaires de ces tétons de manière à permettre un assemblage par encliquetage ; dans l'exemple présenté les quatre tétons 10a, 10b, 10C, 10d de la pièce 1 viennent se bloquer dans les quatre évidements 11 correspondants de la pièce 1' et les quatre tétons de cette pièce 1' viennent se bloquer dans les évidements 11a, 11b, 11c, 11d de la pièce 1 en assurant un positionnement précis des deux pièces 1 et 1' l'une contre l'autre.

Tétons 10 et évidements 11 sont alternés et sont repartis de manière à assurer la plus grande cohésion possible entre pièces accolées. Dans l'exemple de réalisation présenté une alternance de tétons et d'évidement est réalisé à la base du bloc ainsi que dans sa partie médiane haute, pour des raisons qui sont mentionnées plus loin.

Le bloc de jonction, formé par accouplement de pièces identiques, se présente classiquement sous forme d'une boite rectangulaire présentant deux grandes faces parallèles par lesquelles le bloc de jonction est susceptible de s'accoler à d'autres blocs identiques ou similaires, l'épaisseur de la boite et donc du bloc étant classiquement très inférieure aux autres dimensions externes.

Des pieds de fixation, rapportés selon une disposition décrite notamment dans le brevet français n° 2184215 de la Demanderesse ou moulés avec les pièces comme représenté sur les figures 1 à 3, permettent d'assujettir le bloc de Jonction sur un rail de support 2.

Dans la forme de réalisation présentée chaque pièce comporte un pied 12, de type usuel, tel 12 pour 1 et 12' pour 1', comportant un cran permettant son accrochage sur une rive du rail 2 qu'il coince entre lui-même et une zone d'une paroi 16F formant fond de la pièce qui le porte.

Le bloc de jonction formé de deux pièces identiques face à face, est traversé de part en part par un conduit 13 permettant d'introduire deux fibres optiques, une par chaque extrémité de conduit, de manière qu'elles viennent prendre contact en bout l'une avec l'autre.

Ce conduit 13 est en fait fendu longitudinalement, par exemple selon un plan diamétral, il est constitué par deux demi-conduits qui appartiennent chacun à une pièce différente du bloc et qui ont leurs concavités orientées l'une vers l'autre.

Dans la forme de réalisation présentée le demi-conduit 13 de la pièce 1 est rectiligne, il est disposé parallèlement à la paroi de fond 16F du bloc et au rail 2, perpendiculairement à l'axe longitudinal de ce dernier qui est présenté en bout sur la figure 1.

Les fibres optiques à raccorder ne sont pas représentées sur les figures, dans la mesure où elles sont supposées être classiquement constituées chacune d'une âme cylindrique recouverte d'une gaine également cylindrique, ces âmes et ces gaines ayant usuellement mêmes diamètres pour deux fibres optiques à raccorder.

Le conduit 13 est composé d'éléments successifs de révolution centrés sur un même axe longitudinal XX' et respectivement scindés chacun en deux demi-éléments selon le plan diamétral évoqué plus haut qui contient l'axe XX' et qui est parallèle aux grandes faces extérieures du bloc assemblé.

Deux éléments extrêmes 13A1 et 13A2 du conduit 13 sont constitués chacun par deux demi-cônes référencés, également 13A1 et 13A2 et évasés vers l'extérieur en vue de faciliter l'introduction d'une fibre optique dotée de sa gaine à travers le conduit.

Ces éléments 13A1 et 13A2 sont suivis chacun par un élément de retenue 1301 pour 13A1 et 1302 pour 13A2, qui est constitué par deux demi-cylindres, allongés et de même rayon légèrement supérieur à celui de la gaine de la fibre optique que l'on veut y introduire ; chacun des quatre demi-cylindres 13B1 ou 13B2 est muni d'une succession de surépaisseurs transversales 13C, telles 13C1 ou 13C2. Ces surépaisseurs transversales 13C1, présentent ici une forme de croissant comme le montre la figure 2, elles viennent prendre appui sur la gaine de fibre optique placée contre elles, de manière à l'immobiliser.

Deux fentes transversales 14A, 14B sont ménagées en limite des demi-cylindres 13B1 d'une part et, 13B2 d'autre part de l'autre côté de ceux-ci par rapport aux demi-cônes 13A1, 13A2 ; elles séparent chacune des parties extrêmes 15A ou 15B, où sont ménagés un demi-cylindre et un demi-cône, de la partie centrale de la pièce 1 qui les comporte. Chaque fente transversale 14 est ménagée à travers toute l'épaisseur et une portion de la hauteur de la pièce 1 qui la comporte, elle débouche préférablement à l'opposé des pieds 12, au niveau de la paroi supérieure 16 du bloc dont elle est partie intégrante.

Le conduit 13 se prolonge au delà des fentes par deux logements cylindriques 13D1, 13D2 composés chacun de deux demi-logements portant les mêmes références. Chacun de ces deux logements est de courte longueur et a préférablement une entrée chanfreinée, orientée vers la fente transversale 14 où il débouche, de manière à permettre l'entrée d'une fibre optique introduite à travers l'élément de retenue qui le précède, tel l'élément 13B1 pour le logement 13D1.

Un joint d'étanchéité 17, tel 17A ou 17B, vient se loger en fond de chaque logement 13D1 ou 13D2, au niveau où vient buter l'extrémité de gaine de fibre optique. Un guide cylindrique 13E joint les deux logements 13D1, 13D2 d'une même partie 1, il est composé de deux demi-guides portant même référence que lui. Ce guide 13E a un rayon légèrement supérieur à celui des âmes des deux fibres optiques que l'on vient introduire par chacune de ses extrémités de manière à permettre le passage et la rencontre de ces âmes bout à bout, en son centre.

Comme indiqué plus haut, les différentes parties de deux pièces accouplées sont normalement appliquées l'une contre l'autre et il n'est pas prévu de pouvoir les séparer sans l'aide d'outil.

En particulier les parties extrêmes 15A et 15B d'une pièce 1 sont normalement appliquées contre les parties extrêmes correspondantes d'une pièce 1' identique de manière telle qu'il n'est pas Possible d'introduire dans le bloc monté les fibres optiques prévues pour y être raccordées, les surépaisseurs transversales 13C des éléments de retenue 13B1, 13B2 l'interdisant.

Pour permettre ces introductions de fibres optiques, il est prévu d'écarter légèrement une partie extrême 15A ou 15B de la partie extrême, de l'autre pièce, qui est plaquée contre elle, de manière à élargir le conduit fcrmé par les deux demi-cylindres d'un élément de retenue, tel 13B1, et à éloigner suffisamment les unes des autres les surépaisseurs transversales que ces demi-cylindres face à face comportent, pour que le passage d'une fibre dotée de sa gaine soit possible.

En ce but, un évidement 18 est ménagé en bordure interne d'au moins l'une des deux parties extrêmes de chaque pièce pour permettre l'insertion d'un outil permettant de séparer légèrement et temporairement deux parties extrêmes accolées de deux pièces accouplées.

Dans l'exemple de réalisation présenté un évidement borgne, tel 18A ou 18B, à section au moins grossièrement allongée parallèlement à l'axe XX' et par exemple semi-ovoïdale, est ménagé en bordure interne, ici supérieure, de chaque partie extrême 15, parallèlement aux grandes faces de la pièce qui le comporte. Cet évidement débouche en paroi supérieure 16S et se combine avec un évidement correspondant de la pièce 1' accouplée avec celle qui le porte pour constituer un évidement de passage d'outil, dont la section est allongée parallèlement aux bordures internes supérieures des pièces accouplées.

Il est alors possible de faire pénétrer une lame à section au moins approximativement rectangulaire d'un outil non figuré, tel un tournevis, dans l'évidement si les grandes faces de la lame sont parallèles aux bordures internes supérieures des pièces accouplées. Une rotation axiale du tournevis dans l'évidement permet alors d'écarter légèrement et temporairement deux parties extrêmes antérieurement accolées et d'introduire une fibre dans le bloc.

L'élasticité du matériau plastique constituant les pièces et la forme des tétons 10 et des évidements 11 conduisent au retour des parties extrêmes concernées en position accolée, dès retrait de l'outil.

En dernier lieu, un demi-conduit 19 est ménagé en bordure interne de partie centrale de chaque pièce de manière à relier une fenêtre 20 ménagée dans le guide 13E avec la paroi supérieure 16. Ce demi-conduit 19 forme une cheminée d'accès au guide avec le demi-conduit correspondant de la pièce accolée.

La cheminée d'accès ainsi constituée permet de contrôler visuellement la mise bout à bout des fibres à raccorder et de déposer éventuellement un gel d'adaptation d'indice sur les extrémités de fibres bout à bout.

Un bouchon 3, ici au moins grossièrement rectangulaire comme la cheminée, permet d'obturer cette dernière une fois le raccordement effecté, il est monté imperdable dans l'exemple de réalisation présenté.

Ce bouchon comporte ici deux pattes élastiques 4A et 4B reliées à une embase 5 de forme appropriée pour assurer transversalement la tenue en place et le parfait alignement des deux fibres optiques au niveau de la jonction, cette embase 5 comportant par exemple une rainure longitudinale de centrage, non figurée.

La procédure de raccordement de deux fibres optiques, convenablement dénudées sur une longueur correspondant à la moitié de celle du guide 13E, peut s'effectuer soit totalement sur le lieu de l'installation, soit partiellement en usine et partiellement en installation. Dans chaque cas le bloc de jonction, formé de deux pièces 1, 1' accouplées, est partiellement ouvert à l'aide d'un tournevis au niveau d'une paire de parties extrêmes 15 accolées pour permettre l'insertion d'une fibre a travers les éléments 13A, 13B des parties extrêmes écartées, de manière que l'âme de cette fibre parvienne jusqu'à sous la cheminée à travers les guides accolés 13E et que la gaine s'arrête dans les sections semi-cylindriques accolées 13D faisant suite aux éléments 13A, 13B concernés. Le retrait du tournevis bloque alors la fibre optique en position par coincement de sa gaine par les surépaisseurs 13C des deux éléments de prise 13B où elle est logée.

## Revendications

1. Bloc de jonction destiné à assurer le raccordement bout à bout de deux fibres optiques, ce bloc étant traversé de part en part par un conduit et ce conduit, étant constitué d'un guide médian (13E) pour recevoir de façon alignée les extrémités desdites fibres et de deux cavités de retenue (13B1, 13B2) pour coincer par serrage la partie gainée des deux fibres, caractérisé en ce qu'il est constitué de deux pièces identiques ou similaires (1, 1') accolées face à face de sorte que ce conduit (13) soit ménagé par moitié dans chacune des pièces au long de ces pièces, et que les parties extrêmes (15A, 15B) des deux pièces (1, 1') qui forment lesdites cavités sont élastiquement séparables l'une de l'autre pour permettre le passage d'une fibre à raccorder jusqu'à obtenir un positionnement correct de l'âme de cette fibre dans ledit guide médian (13E) pour son raccordement.

2. Bloc de jonction selon la revendication 1, caractérisé en ce que chaque partie extrême (15A ou 15B) de chaque pièce est partiellement séparée de la partie centrale, comportant le guide médian (13E), par une fente transversale (14A ou 14B) de manière à permettre un écartement temporaire limité et localisé au niveau des seules parties extrêmes de deux pièces (1, 1') qui restent accolées au niveau de leurs parties centrales.

3. Bloc de jonction selon la revendication 2, caractérisé en ce que chaque pièce comporte un évidement (18A ou 18B) de passage de lame d'outil en bordure interne d'au moins une partie extrême (15A ou 15B) de manière à permettre, sous l'action dudit outil, un écartement limité de cette partie extrême par rapport à la partie extrême de la pièce à laquelle elle est accolée et un élargissement de la cavité de retenue (13B1 ou 13B2) correspondante.

4. Bloc de jonction selon la revendication 3, caractérisé en ce que chaque pièce de forme au moins grossièrement rectangulaire comporte, en vue d'un emboîtement mutuel, une alternance de tétons (10) et d'évidements (11) complémentaires de ces tétons à sa base sous ledit conduit (13) et dans la partie centrale au dessus dudit guide médian (13E).

5. Bloc de jonction selon la revendication 4, caractérisé en ce que les cavités de retenue (13B1, 13B2) d'une pièce sont demi-cylindrique et quelles sont dotés d'une succession de surépaisseurs transversales (13C1 ou 13C2) en forme de croissants, destinées à prendre appui sur une gaine de fibre pour l'immobiliser.

6. Bloc de jonction selon la revendication 1 ou 2, caractérisé en ce qu'il comporte une cheminée (19) qui est ménagée par moitié dans chacune des parties centrales des deux pièces (1, 1') accolées formant le bloc et qui débouche d'une part au milieu du guide médian (13E) et d'autre part à l'extérieur du bloc pour permettre de contrôler visuellement la mise bout à bout des âmes de fibres, et éventuellement de déposer un gel d'adaptation d'indice sur les extrémités des âmes raccordées.

7. Bloc de jonction selon la revendication 6, caractérisé en ce que la cheminée (19) reçoit un bouchon (3) permettant de l'obstruer et d'assurer la tenue en place et le centrage des deux fibres optiques au niveau de la jonction.

## Claims

1. A junction block for end-to-end interconnection of two optical fibers, said block being traversed entirely by a duct, and the duct being constituted of a central guide (13E) for receiving the ends of said fibers in an aligned manner, and of two retention cavities (13B1, 13B2) for immobilizing the sheath portions of the two fibers by clamping, characterized in that the block consists of two identical or similar parts (1, 1') tied face-to-face to one another in such a way that said duct (13) is formed respectively by a half duct worked in each part and running lengthwise through said parts, and that the end portions (15A, 15B) of the two parts (1, 1'), which constitute said cavities, are resiliently separable from one another to enable the passage of a fiber to be connected therethrough until it reaches a correct position for the core of said fiber inside the central guide (13E) for its connection.

2. A junction block according to claim 1, characterized in that each end portion (15A or 15B) of each part is separated from the central portion containing said central guide (13E) by a transversal slot (14A or 14B), so as to enable a temporarily limited and localized separation of the two parts (1, 1') at the end portions only, which parts remain tied to each other along their central portions.

3. A junction block according to claim 2, characterized in that each part includes a recess (18A or 18B) running along the inside edge of at least one of said end portions (15A or 15B) and forming the passage for a tool blade, so that, by the action of said tool, a limited spacing of said end portion relative to the end portions of the part to which it is tied, and a widening of the corresponding retention cavity (13B1 or 13B2) is obtained.

4. A junction block according to claim 3, characterized in that each part of at least a generally rectangular shape includes, for the purpose of mutual interfitting, an alternation of studs (10) and of complementary recesses (11) for the studs at its base beneath said duct (13) and in its central portion above said central guide (13E).

5. A junction block according to claim 4, characterized in that the retention cavities (13B1, 13B2) of a part have a half-cylindrical shape and are provided with a succession of transversal thickenings (13C1 or 13C2), which have a crescent shape and are intended to bear against a fiber sheath in order to immobilize it.

6. A junction block according to claims 1 or 2, characterized in that it comprises a chimney (19), which is formed by halves in each of the central portions of the two tied parts (1, 1') that form the block, and which open out on the one hand into the middle of the central guide (13E) and on the other hand to the outside of the block, in order to allow a visual monitoring of the operation of bringing the cores of the fibers into end-to-end contact, and to possibly deposit a refractive index matching gel on the ends of the interconnected cores.

7. A junction block according to claim 6, characterized in that the chimney (19) receives a plug (3) suitable for closing the chimney and for holding in place and centering the two optical fibers in the junction position.

## Ansprüche

1. Anschlußblock für die stirnseitigen Anschluß zweier Lichtleitfasern, wobei der Block durchgängig von einem Kanal durchdrungen ist und der Kanal aus einem mittigen Führungskanal (13E) zur fluchtenden Aufnahme der Enden der Fasern sowie zweier Rückhalteräume (13B1, 13B2) zum Arretieren des umhüllten Abschnitts der beiden Fasern durch Einklemmen besteht, dadurch gekennzeichnet, daß der Block aus zwei identischen oder ähnlichen Bauteilen (1, 1') besteht, die Seite an Seite fest verbunden sind, derart, daß der Kanal (13) zur Hälfte in jedem der Bauteile entlang der Bauteile eingearbeitet ist, und daß die Endabschnitte (15A, 15B) der beiden Bauteile (1, 1'), welche die Räume bilden, voneinander elastisch abspreizbar sind mit dem Zweck, den Durchgang einer anzuschließenden Faser soweit zu ermöglichen, bis eine richtige Positionierung des Faserkerns in dem mittigen Führungskanal (13E) für ihren Anschluß erreicht ist.

2. Anschlußblock nach Anspruch 1, dadurch gekennzeichnet, daß jeder Endabschnitt (15A oder 15B) jedes Bauteils vom Mittelabschnitt, der den mittigen Führungskanal (13E) aufweist, durch einen Querschlitz (14A oder 14B) teilweise getrennt ist, derart, daß ein zeitweiliges begrenztes und lokalisiertes Abspreizen nur der Endabschnitte der beiden Bauteile (1, 1') voneinander möglich ist, die aber im Bereich ihrer Mittelabschnitte verklammert bleiben.

3. Anschlußblock nach Anspruch 2, dadurch gekennzeichnet, daß jedes Bauteil an der inneren Begrenzung mindestens eines Endabschnitts (15A oder 15B) eine Aussparung (18A oder 18B) für den Durchtritt einer Werkzeugschneide aufweist, derart, daß durch Einwirken des Werkzeugs ein begrenztes Abspreizen dieses Endabschnitts bezüglich des Endabschnitts des Bauteils, mit dem er verklammert ist, sowie eine Erweiterung des betreffenden Rückhalteraums (13B1 oder 13B2) ermöglicht wird.

4. Anschlußblock nach Anspruch 3, dadurch gekennzeichnet, daß jedes Bauteil von mindestens annähernd rechteckiger Form zur gegenseitigen Verklammerung eine Wechselfolge von Zapfen (10) und entsprechenden Aussparungen (11) für diese Zapfen an der Basis unter dem Kanal (13) und im Mittelabschnitt über dem mittigen Führungskanal (13E) aufweist.

5. Anschlußblock nach Anspruch 4, dadurch gekennzeichnet, daß die Rückhalteräume (13B1, 13B2) eines Bauteils halbzylindrisch ausgebildet und mit einer Folge von Querverdickungen (13C1 oder 13C2) in Sichelform versehen sind, welche zum Anschlag mit einer Faserhülle zu deren Arretierung bestimmt sind.

6. Anschlußblock nach Anspruch 1 oder 2, dadurch gekennzeichnet, daß er einen Schacht (19) aufweist, der hälftig in jeden der Mittelabschnitte der beiden verklammerten, den Block bildenden Teile (1, 1') eingearbeitet ist und einerseits in der Mitte des mittigen Führungskanals (13E) und andererseits zur Außenseite des Blocks hin mündet, mit dem Zweck, das stirnseitige Zusammenstoßen der Faserkerne optisch kontrollieren zu können und gegebenenfalls ein Gel zur Anpassung des Brechungsindex auf die Enden der angeschlossenen Faserkerne aufzutragen.

7. Anschlußblock nach Anspruch 6, dadurch gekennzeichnet, daß der Schacht (19) einen Stopfen (3) aufnimmt, der das Verschließen des Schachts und die ortsfeste Halterung sowie die Zentrierung der beiden Lichtleitfasern im Verbindungsbereich ermöglicht.

**FIG.2**

**FIG.1**

**FIG.3**

EP 0 208 155 B1